# EUROPEAN PATENT APPLICATION

(11) **EP 4 682 760 A1**
(43) Date of publication of application: **21.01.2026**
(21) Application number: 24213884.0
(22) Date of filing: 19.11.2024
(51) Int. Cl.: G06N 3/006

(54) **CONTENT GENERATION METHOD AND APPARATUS BASED ON ARTIFICIAL INTELLIGENCE, DEVICE AND STORAGE MEDIUM**

(30) Priority: 18.07.2024 CN 202410970234
(71) Applicant: BEIJING BAIDU NETCOM SCIENCE TECHNOLOGY CO., LTD., Beijing (CN)
(72) Inventor: LI, Cong, Beijing 100085 (CN); SUN, Yue, Beijing 100085 (CN); LIU, Hao, Beijing 100085 (CN); XIAO, Xinyan, Beijing 100085 (CN)
(74) Representative: Wynne-Jones IP Limited

(57) **Abstract**

Provided is a content generation method and apparatus based on artificial intelligence, a device and a storage medium, relating to the fields of computer vision, deep learning, large model, and intelligent agent. The content generation method includes: sending, by a first intelligent agent, a task execution requirement to a second intelligent agent according to task guidance information, wherein the task guidance information comprises guidance information for generating content, and the task execution requirement comprises a target task that needs to be executed by the second intelligent agent to generate content (S101); and receiving, by the first intelligent agent, a task execution result from the second intelligent agent, wherein the task execution result comprises an execution result generated after the second intelligent agent executes the target task (S102).

## Description

### TECHNICAL FIELD

The present disclosure relates to the field of artificial intelligence technology, and in particular to the fields of computer vision, deep learning, large model, intelligent agent and other technologies, and can be applied to artificial intelligence generated content (AIGC), content generation based on artificial intelligence and other scenarios.

### BACKGROUND

The artificial intelligence is a discipline that studies how to use computers to simulate certain human thought processes and intelligent behaviors (such as learning, reasoning, thinking, planning, etc.), and involves both hardware-level and software-level technologies. The artificial intelligence hardware technologies generally include sensor, dedicated artificial intelligence chip, cloud computing, distributed storage, big data processing and other technologies; and the artificial intelligence software technologies mainly include several major directions such as computer vision technology, speech recognition technology, natural language processing technology, as well as machine learning/deep learning, big data processing technology, knowledge graph technology and others.

With the development of computer technology and network technology, deep learning models are more and more widely applied, and have made breakthrough progress in various fields, where the AI generated content (AIGC) is an important direction of deep learning.

### SUMMARY

The present disclosure provides a content generation method and apparatus based on artificial intelligence, a device and a storage medium.

According to an aspect of the present disclosure, provided is a content generation method based on artificial intelligence, including:
sending, by a first intelligent agent, a task execution requirement to a second intelligent agent according to task guidance information, where the task guidance information includes guidance information for generating content, and the task execution requirement includes a target task that needs to be executed by the second intelligent agent to generate content; and
receiving, by the first intelligent agent, a task execution result from the second intelligent agent, where the task execution result includes an execution result generated after the second intelligent agent executes the target task.

According to another aspect of the present disclosure, provided is a content generation method based on artificial intelligence, including:
receiving, by a second intelligent agent, a task execution requirement sent by a first intelligent agent according to task guidance information, where the task guidance information includes guidance information for generating content, and the task execution requirement includes a target task that needs to be executed by the second intelligent agent to generate content;
generating, by the second intelligent agent, a task execution result after executing the target task according to the task execution requirement; and
sending, by the second intelligent agent, the task execution result to the first intelligent agent.

According to another aspect of the present disclosure, provided is a content generation apparatus based on artificial intelligence, applied to a first intelligent agent, including:
a first sending module configured to send a task execution requirement to a second intelligent agent according to task guidance information; where the task guidance information includes guidance information for generating content, and the task execution requirement includes a target task that needs to be executed by the second intelligent agent to generate content; and
a first receiving module configured to receive a task execution result from the second intelligent agent; where the task execution result includes an execution result generated after the second intelligent agent executes the target task.

According to another aspect of the present disclosure, provided is a content generation apparatus based on artificial intelligence, applied to a second intelligent agent, including:
a third receiving module configured to receive a task execution requirement sent by a first intelligent agent according to task guidance information, where the task guidance information includes guidance information for generating content, and the task execution requirement includes a target task that needs to be executed by the second intelligent agent to generate content;
a calling module configured to generate a task execution result after executing the target task according to the task execution requirement; and
a second sending module configured to send the task execution result to the first intelligent agent.

According to yet another aspect of the present disclosure, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

According to yet another aspect of the present disclosure, provided is a non-transitory computer-readable storage medium storing a computer instruction thereon, and the computer instruction is used to cause a computer to execute the method according to any one of the embodiments of the present disclosure.

According to yet another aspect of the present disclosure, provided is a computer program product including a computer program, and the computer program implements the method according to any one of the embodiments of the present disclosure, when executed by a processor.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure, where:
FIG. 1 is a schematic flow chart of a content generation method based on artificial intelligence according to an embodiment of the present disclosure;
FIG. 2 is a schematic diagram of an application scenario of the content generation method based on artificial intelligence according to an embodiment of the present disclosure;
FIG. 3 is a schematic flow chart of a content generation method based on artificial intelligence according to another embodiment of the present disclosure;
FIG. 4 is a schematic flow chart of a content generation method based on artificial intelligence according to another embodiment of the present disclosure;
FIG. 5 is a schematic flow chart of a content generation method based on artificial intelligence according to another embodiment of the present disclosure;
FIG. 6 is a schematic flow chart of a content generation method based on artificial intelligence according to another embodiment of the present disclosure;
FIG. 7 is a schematic flow chart of a content generation method based on artificial intelligence according to an embodiment of the present disclosure;
FIG. 8 is a schematic flow chart of a content generation method based on artificial intelligence according to another embodiment of the present disclosure;
FIG. 9 is a schematic flow chart of a content generation method based on artificial intelligence according to another embodiment of the present disclosure;
FIG. 10 is a schematic flow chart of a content generation method based on artificial intelligence according to another embodiment of the present disclosure;
FIG. 11 is a schematic flow chart of a content generation method based on artificial intelligence according to another embodiment of the present disclosure;
FIG. 12 is a schematic flow chart of a content generation method based on artificial intelligence according to another embodiment of the present disclosure;
FIG. 13 is a system architecture diagram according to an embodiment of the present disclosure;
FIG. 14 is an agent framework diagram according to an embodiment of the present disclosure;
FIG. 15 is a schematic diagram of a search matching enhancement module according to an embodiment of the present disclosure;
FIG. 16 is a structural schematic diagram of a content generation apparatus based on artificial intelligence according to an embodiment of the present disclosure;
FIG. 17 is a structural schematic diagram of a content generation apparatus based on artificial intelligence according to another embodiment of the present disclosure;
FIG. 18 is a structural schematic diagram of a content generation apparatus based on artificial intelligence according to an embodiment of the present disclosure;
FIG. 19 is a structural schematic diagram of a content generation apparatus based on artificial intelligence according to another embodiment of the present disclosure;
FIG. 20 is a structural schematic diagram of an intelligent agent system according to an embodiment of the present disclosure; and
FIG. 21 is a block diagram of an electronic device for implementing the embodiments of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

Compared with the text content, images and sounds in the video content provide users with the intuitive and immersive information acquisition experience with a lower threshold, producing the better propagation effect. With the rapid rise of short video-related fields in recent years, the demand for video content has grown rapidly. There are many approaches to create content such as videos. For example, a video editing tool is used to edit an original video. The approach depends on the user's mastery of the tool, resulting in low video production efficiency and high learning cost. For another example, the AIGC video generation tool may be used to automatically generate videos, but the quality of the generated videos needs to be improved. The AIGC may include the process of automatically creating content in various forms such as text, image, audio, video, etc. through the artificial intelligence technology. The AIGC has begun to deeply affect all walks of life, especially applications centered around text or conversation types, and image generation applications are also relatively mature. However, due to problems such as controllability, duration, quality and cost encountered in video generation, the current video creation still requires a large amount of manual participation, seriously restricting the production efficiency.

In order to efficiently produce the video content meeting user requirements, the embodiments of the present disclosure fully utilize various types of content resources on the Internet based on an agent framework, and realize a universal intelligent video creation agent system by deeply mining and automatically calling the potential of the AIGC model. Agents may also be referred to as intelligent agents, intelligent entities, etc.

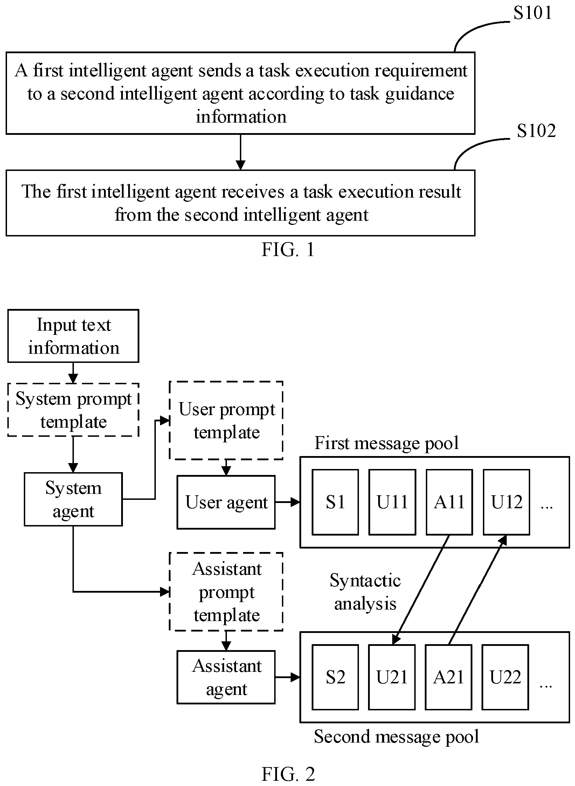

FIG. 1 is a schematic flow chart of a content generation method based on artificial intelligence according to an embodiment of the present disclosure. The method includes the following steps.

S101: A first intelligent agent sends a task execution requirement to a second intelligent agent according to task guidance information; where the task guidance information includes guidance information for generating content, and the task execution requirement includes a target task that needs to be executed by the second intelligent agent to generate content.

S102: The first intelligent agent receives a task execution result from the second intelligent agent; where the task execution result includes an execution result generated after the second intelligent agent executes the target task.

In the embodiment of the present disclosure, the first intelligent agent may firstly obtain the task guidance information, where the task guidance information is information obtained based on a descriptive text input by a user, and the task guidance information may include guidance information for generating content, such as relevant information including a task that needs to be executed and a tool that needs to be called to generate content. The content in the embodiment of the present disclosure may include one or a combination of text, video, audio, and the like. The first intelligent agent may obtain the task guidance information from other intelligent agents, or generate the task guidance information by itself. The first intelligent agent may generate a task execution requirement according to the task guidance information, and send the task execution requirement to the second intelligent agent. The task execution requirement may include one or more target tasks that need to be executed by the second intelligent agent. According to the characteristics of the target task, the task execution requirement may also include one or more target tools that need to be called to execute one or more target tasks. For example, if one complete content generation task needs to be decomposed into a plurality of target tasks, the first intelligent agent may send one task execution requirement to the second intelligent agent each time, where the task execution requirement includes one target task and one or more target tools that need to be called to execute the target task; then the first intelligent agent continues to send another task execution requirement to the second intelligent agent according to the task execution result returned by the second intelligent agent, and so on, until the first intelligent agent no longer generates new task execution requirements or the second intelligent agent completes all target tasks.

In addition, a maximum quantity of dialogues may also be set in the embodiment of the present disclosure. The process from the event that the first intelligent agent sends the task execution requirement to the second intelligent agent to the event that the first intelligent agent receives the task execution result may be regarded as one dialogue. If the quantity of dialogues exceeds the maximum quantity of dialogues, the content generation process can be terminated even if the first intelligent agent has not generated all the target tasks required for the task guidance information.

In an application scenario, as shown in FIG. 2, the intelligent agent may include a system agent, a user agent, an assistant agent, etc., which is not limited in the present disclosure. The system agent may generate the task guidance information based on input text information and a system prompt template. The system agent may also send the generated task guidance information to the user agent and the assistant agent. It is assumed that the first intelligent agent is a user agent and the second intelligent agent is an assistant agent. After receiving the task guidance information from the system agent, the user agent generates a task execution requirement according to the task guidance information. After the user agent sends the task execution requirement to the assistant agent, the assistant agent may call the target tool to execute the target task according to the task guidance information and the task execution requirement, and obtain a task execution result. After the assistant agent returns the task execution result to the user agent, the user agent continues to generate a new task execution requirement according to the task execution result, the previous task guidance information and the task execution requirement, etc., and then sends the new task execution requirement to the assistant agent for processing; and so on, until the user agent no longer generates the new task execution requirement or the assistant agent completes all target tasks.

According to the embodiment of the present disclosure, the first intelligent agent can generate and send the task execution requirement to the second intelligent agent based on the task guidance information, and the second intelligent agent can be guided to call the target tool to execute the target task, helping make full use of content generation-related tools to execute more tasks, complete more complex content generation requirements, and generate the high-quality content.

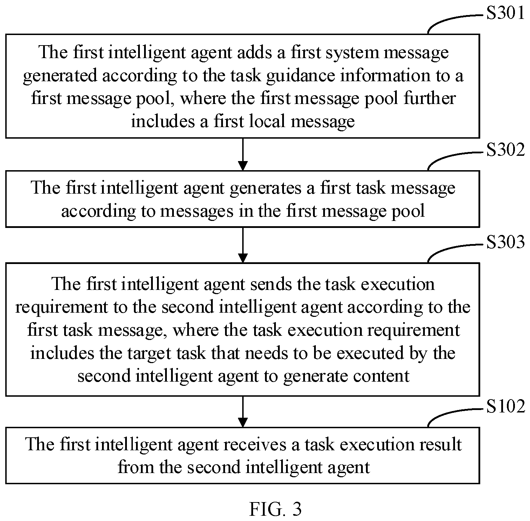

FIG. 3 is a schematic flow chart of a content generation method based on artificial intelligence according to another embodiment of the present disclosure. The method may include one or more features of the above content generation method. In an implementation, S101 in which the first intelligent agent sends the task execution requirement to the second intelligent agent according to the task guidance information includes the following steps.

S301: The first intelligent agent adds a first system message generated according to the task guidance information to a first message pool, where the first message pool further includes a first local message.

S302: The first intelligent agent generates a first task message according to messages in the first message pool.

S303: The first intelligent agent sends the task execution requirement to the second intelligent agent according to the first task message, where the task execution requirement includes the target task that needs to be executed by the second intelligent agent to generate content.

In the embodiment of the present disclosure, the first intelligent agent may generate the first system message according to the task guidance information and a prompt template of the first intelligent agent. The first intelligent agent may add the first system message to its own first message pool. The first message pool may provide the first intelligent agent with message storage and message extraction functions.

In the embodiment of the present disclosure, an initial first local message of the first intelligent agent may be pre-set in the first message pool. The first intelligent agent may generate the first task message according to the first system message and the initial first local message. The first intelligent agent may add the first task message to the first message pool, and the first intelligent agent may perform syntactic analysis on the first task message to obtain the task execution requirement. Then, the first intelligent agent may send the task execution requirement to the second intelligent agent, and the second intelligent agent calls the target tool in the task execution requirement to execute the corresponding target task.

According to the embodiment of the present disclosure, the first intelligent agent can generate the first task information based on the first system message, the first local message and the like in the first message pool, and then send the task execution requirement to the second intelligent agent based on the first task information; and the second intelligent agent can be controlled by the task execution requirement to make full use of content generation-related tools to execute more tasks and complete more complex content generation requirements, thereby improving the quality of the generated content.

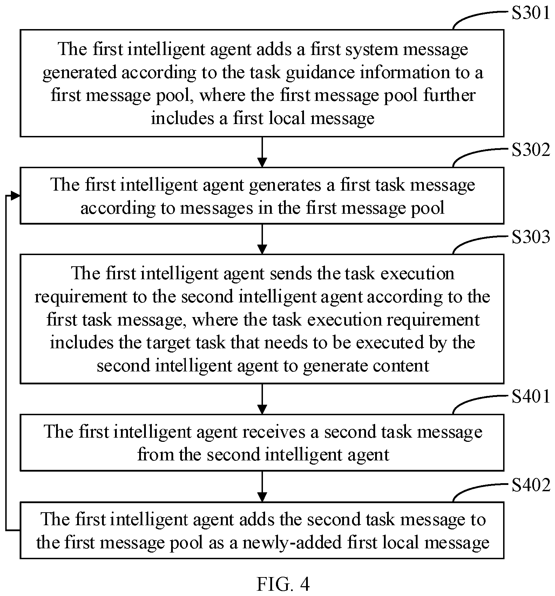

FIG. 4 is a schematic flow chart of a content generation method based on artificial intelligence according to another embodiment of the present disclosure. The method may include one or more features of the above content generation method. In an implementation, S102 in which the first intelligent agent receives the task execution result from the second intelligent agent includes the following step.

S401: The first intelligent agent receives a second task message from the second intelligent agent; where the second task message includes the task execution result, and the second task message is generated by the second intelligent agent according to messages in a second message pool; the second message pool includes a second system message and a second local message, the second system message is generated by the second intelligent agent according to the task guidance information, and the second local message includes the task execution requirement from the first intelligent agent.

In the embodiment of the present disclosure, the second intelligent agent may generate the second system message according to the task guidance information and a prompt template of the second intelligent agent. The second intelligent agent may add the second system message to its own second message pool. The second message pool may provide the second intelligent agent with message storage and message extraction functions. After receiving the task execution request from the first intelligent agent, the second intelligent agent may add the received task execution request to the second message pool as the second local message. Then, the second intelligent agent may call the target tool to execute the target task according to the second system message and the second local message, and generate the second task message including the task execution result. The second intelligent agent may add the second task to the second message pool, and return the second task message including the task execution result to the first intelligent agent.

According to the embodiment of the present disclosure, the task execution requirement and the task execution result are mutually transmitted between the first intelligent agent and the second intelligent agent, helping split the content such as the video generation requirement into a plurality of task execution requirements, so that more tasks can be executed, more complex content generation requirements can be completed, and the higher-quality content can be generated.

In an implementation, the method may further include the following step.

S402: The first intelligent agent adds the second task message to the first message pool as a newly-added first local message; where the first message pool further includes the first task message corresponding to the processed first local message and the newly-added first local message.

In the embodiment of the present disclosure, after receiving the second task message from the second intelligent agent, the first intelligent agent may add the second task message to the first message pool as a new first local message. The first intelligent agent may return to execute S202, i.e., generate a new first task message according to the messages in the first message pool, for example, according to the first system message, the first local message, the first task message and the new first local message. Then, the first intelligent agent may continue to execute S203, i.e., perform syntactic analysis on the new first task message to obtain a new task execution requirement. Then, the first intelligent agent may send the new task execution requirement to the second intelligent agent, and the second intelligent agent calls the target tool in the new task execution requirement to execute the corresponding target task.

In an example, referring to FIG. 2, the user agent may generate a first task message A11 according to a first system message S1 and an initial first local message U11 in the first message pool, add A11 to the first message pool and perform syntactic analysis on A11, and then send an analysis result to an assistant agent. The second message pool of the assistant agent may include a second system message S2 and a second local message U21 newly added according to the received analysis result. After calling the target tool to execute the target task according to S2 and U21, the assistant agent may generate a second task message A21, add A21 to the second message pool and return A21 to the user agent. The user agent adds A21 to the first message pool as a new first local message U12; then generates a new A12 according to S1, U11, A11 and U12; and then performs syntactic analysis on A12 and sends the analysis result to the assistant agent. The assistant agent newly adds a second local message U22 to the second message pool according to the received analysis result. After calling the target tool to execute the target task according to S2, U21, A21 and U22, the assistant agent may generate a second task message A22, add A22 to the second message pool and return A22 to the user agent; and so on, until the user agent no longer generates new first task messages or analysis results thereof, or the assistant agent completes all target tasks, the current content generation process can be ended, and the final task execution result is used as the content generation result.

According to the embodiment of the present disclosure, the first intelligent agent can add the task execution result of the second intelligent agent to its own message pool to determine subsequent task execution requirements, helping split the content generation requirement into a plurality of related task execution requirements. By executing a plurality of target tasks iteratively, more complex content generation requirements can be completed, and the higher-quality content can be generated.

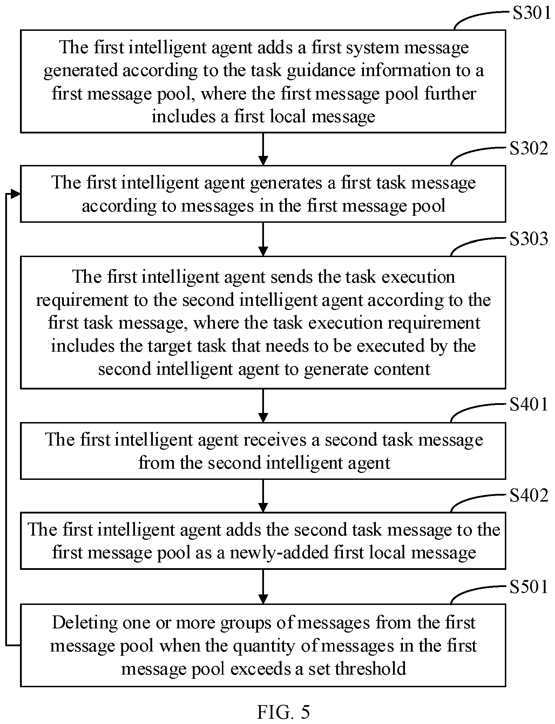

FIG. 5 is a schematic flow chart of a content generation method based on artificial intelligence according to another embodiment of the present disclosure. The method may include one or more features of the above content generation method. In an implementation, the method may further include the following step.

S501: One or more groups of messages are deleted from the first message pool when the quantity of messages in the first message pool exceeds a set threshold; where the one group of messages includes one first local message and its corresponding first task message.

In the embodiment of the present disclosure, if the first intelligent agent detects that the quantity of messages in the first message pool is too large, some of the messages may be deleted. If one first local message and a next first task message generated according to the first local message are taken as one group, and if there is a need to delete messages, one or more groups of messages that are ranked first in the message pool may be deleted each time. For example, referring to FIG. 2, U11 and A11 may be firstly deleted and then U12 and A12 may be deleted from the first message pool. The second message pool may also be processed similarly. The quantity thresholds of messages in the first message pool and the second message pool may be the same or different. By controlling the quantity of messages in the message pool, the amount of calculation can be effectively controlled, thereby increasing the speed of content generation.

In the embodiment of the present disclosure, S302, S303, S401, S402 and S501 may be executed circularly if the execution conditions are met. For example, after S402, if it is determined that the quantity of messages exceeds the threshold, S501 may be executed to delete some messages. S302 is executed again to continue to generate a new first task message based on the first message pool after deletion, and then S303, S401 and S402 continue to be executed until the first intelligent agent no longer generates new first task messages or the second intelligent agent completes all target tasks.

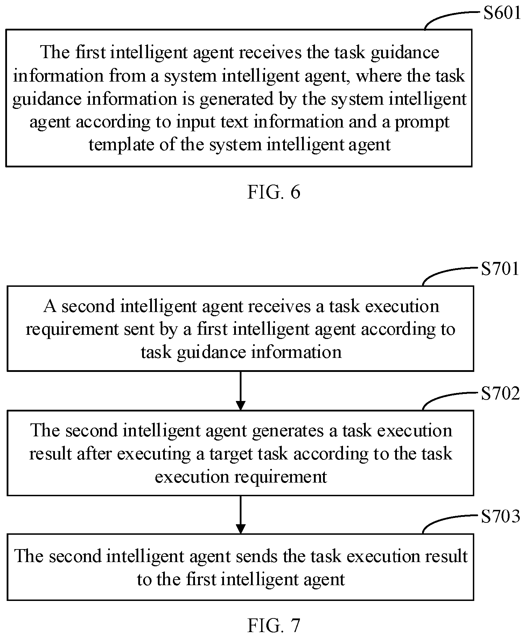

FIG. 6 is a schematic flow chart of a content generation method based on artificial intelligence according to another embodiment of the present disclosure. The method may include one or more features of the above content generation method. In an implementation, the method may further include the following step.

S601: The first intelligent agent receives the task guidance information from a system intelligent agent, where the task guidance information is generated by the system intelligent agent according to input text information and a prompt template of the system intelligent agent.

In the embodiment of the present disclosure, prompt templates of the system intelligent agent, the first intelligent agent and the second intelligent agent may be preset. The system intelligent agent generates the task guidance information according to the input text information and its own prompt template. The input text information may include information such as text features and text vectors extracted based on the initial input text. Then, the system intelligent agent may send the task guidance information to the first intelligent agent and the second intelligent agent respectively. The first intelligent agent may generate the first system message according to the task guidance information and its own prompt template (referring to S301). The second intelligent agent may generate the second system message according to the task guidance information and its own prompt template.

In an implementation, the target task includes at least one of: a retrieval task, a segmentation task, a shot division task, a matching task, a generation task, or a content synthesis task.

In an implementation, a target tool that needs to be called to execute the target task includes at least one of: a retrieval tool, a segmentation tool, a shot division tool, a matching tool, a generation tool, or a synthesis tool.

In an implementation, the task execution result includes at least one of: a retrieval result, a segmentation result, a shot division result, a matching result, a generation result, or a synthesis result.

In the embodiment of the present disclosure, the task execution result of the second intelligent agent may include an intermediate task execution result and a final task execution result. For example, the retrieval result, segmentation result, shot division result, matching result and generation result are intermediate task execution results; and the synthesis result is the final task execution result. The second intelligent agent may return the intermediate task execution result to the first intelligent agent for subsequent processing, or may output or store the intermediate task execution result. The second intelligent agent may directly output the final task execution result or may send the final task execution result to the first intelligent agent, and the first intelligent agent outputs the final task execution result.

In an implementation, when the target task includes a shot division task, the target tool that needs to be called to execute the shot division task includes a shot division tool, and the task execution result includes a shot division result obtained after calling the shot division tool to execute the shot division task.

In the embodiment of the present disclosure, the task execution requirement sent by the first intelligent agent to the second intelligent agent may include information such as task name, task identifier, tool name, tool identifier, etc. The first task execution requirement sent by the first intelligent agent to the second intelligent agent may indicate the shot division task and the shot division tool. After calling the shot division tool to execute the shot division task, the second intelligent agent generates the shot division result according to the messages in the second message pool, adds the shot division result to the second task pool as the second task message, and sends the shot division result to the first intelligent agent. The shot division result may include a text segment corresponding to each shot obtained after performing the shot division task on the text information to be processed. For example, shot 1 corresponds to storyboard text 1, shot 2 corresponds to storyboard text 2, shot 3 corresponds to storyboard text 3, and so on. The text information to be processed may be text information extracted based on the task guidance information.

For example, referring to FIG. 2, the analysis result of the first task message A11 sent by the user agent to the assistant agent may indicate the shot division task and the shot division tool. The assistant agent calls the shot division tool according to the received analysis result, and may obtain a storyboard text corresponding to each shot in the text information to be processed. The assistant agent may generate a shot division result based on the second system message S1, the second local message U21 corresponding to the received analysis result, and the correspondence between shot and storyboard text; add the shot division result to the second task pool as the second task message A21; and send the shot division result to the user agent.

In an implementation, when the target task includes a retrieval task, the target tool that needs to be called to execute the retrieval task includes a retrieval tool, and the task execution result includes a retrieval result obtained after calling the retrieval tool to execute the retrieval task.

In the embodiment of the present disclosure, the first intelligent agent may send a second task execution requirement to the second intelligent agent according to the shot division result, to indicate the retrieval task and the retrieval tool. The second intelligent agent may call the retrieval tool to retrieve according to the shot division result to obtain the retrieval result. The retrieval result may include storyboard text and its corresponding image, video, video address, etc. For example, it is retrieved that storyboard text 1 corresponds to video 1 and video 2, and storyboard text 2 corresponds to video 3. The retrieval result may include: storyboard text 1 corresponds to link addresses of video 1 and video 2, and storyboard text 2 corresponds to video 3. After generating the retrieval result according to the messages in the second message pool, the retrieval result is added to the second task pool as the second task message, and the retrieval result is sent to the first intelligent agent.

In another implementation, the first intelligent agent may also send a second task execution requirement to the second intelligent agent according to the text information to be processed, to indicate the retrieval task and the retrieval tool. The second intelligent agent may call the retrieval tool to retrieve according to the text information to be processed to obtain the retrieval result. The retrieval result may include the text information to be processed and its corresponding image, video, video address, etc.

For example, referring to FIG. 2, the analysis result of the first task message A12 sent by the user agent to the assistant agent may indicate the retrieval task and the retrieval tool. The assistant agent calls the retrieval tool according to the received analysis result, and may obtain information of the content corresponding to the storyboard text after performing the retrieval task on the storyboard text in the shot division result. The assistant agent may generate a retrieval result based on the second system message S 1, the second local message U21, the second task message A21, the second local message U22 corresponding to the received analysis result, and the correspondence between storyboard text and content; add the retrieval result to the second task pool as a new second task message A22; and send the retrieval result to the user agent.

In an implementation, when the target task includes a segmentation task, the target tool that needs to be called to execute the segmentation task includes a segmentation tool, and the task execution result includes a content segment obtained after calling the computer vision tool to execute the segmentation task based on the retrieval result. For example, when the target task includes a segmentation task, the target tool that needs to be called to execute the segmentation task includes a computer vision tool, and the task execution result includes video-text pairs (or text-video pairs) obtained after calling the computer vision tool to execute the segmentation task based on the retrieval result, where the video-text pair includes a segmented video segment and its corresponding text segment. These video-text pairs may be stored in a designated location such as a material library.

In the embodiment of the present disclosure, the first intelligent agent sends a third task execution requirement to the second intelligent agent based on the retrieval result to indicate the segmentation task and computer vision (CV) tool. The second intelligent agent may call the CV tool to perform the segmentation task on the retrieval result (such as images, videos, etc.), then generate a segmentation result based on the messages in the second message pool, add the segmentation result to the second task pool as the second task message, and send the segmentation result to the first intelligent agent. The segmentation result may include video-text pairs obtained after using the CV tool to perform the segmentation task on the retrieval result. The video-text pair may include a text segment and its corresponding video segment. The video segment may be sub-materials suitable for video creation and editing. For example, the CV tool is used to perform text extraction and semantic segmentation on a video to obtain the correspondence between the text segment and the video segment, for example, a [(T, V)] list. Here, (T, V) represents a video-text pair, T represents text content extracted from the video, and V represents a video sub-material or an address of the video sub-material or other information segmented from the video. These video-text pairs may be firstly saved in a preset storage space (Memory).

For example, referring to FIG. 2, the analysis result of the first task message A13 sent by the user agent to the assistant agent may indicate the segmentation task and the computer vision tool. The assistant agent calls the computer vision tool according to the received analysis result, and may obtain a descriptive text corresponding to each video material in the retrieval result. The assistant agent may generate a segmentation result according to the second system message S1, the second local message U21, the second task message A21, the second local message U22, the second task message A22, the second local message U23 corresponding to the received analysis result, the segmented text-video pair, etc.; add the segmentation result to the second task pool as the second task message A23; and send the segmentation result to the user agent.

In an implementation, when the target task includes a matching task, the target tool that needs to be called to execute the matching task includes a matching tool, and the task execution result includes a matching result obtained by calling the matching tool to match based on the shot division result.

In the embodiment of the present disclosure, the first intelligent agent sends a fourth task execution requirement to the second intelligent agent based on the segmentation result to indicate the matching task and the matching tool. For example, the second intelligent agent calls the matching tool to perform the matching task on the segmentation result, and matches the storyboard text with the text segment in the segmented video-text pair semantically, to generate a matching result based on the messages in the second message pool, adds the matching result to the second task pool as the second task message, and sends the matching result to the first intelligent agent. The matching result may include which storyboard texts have matching video-text pairs, which storyboard texts have no matching video-text pairs, etc. For the storyboard texts having no matching video-text pairs, other tools may be needed to generate corresponding video segments. For another example, the second intelligent agent calls the matching tool to perform the matching task on the retrieval result, and matches the storyboard text with the retrieval result semantically, to generate a matching result based on the messages in the second message pool. The matching result may include which storyboard texts have matching retrieval results such as content materials or descriptive texts, which storyboard texts have no matching retrieval results, etc. For the storyboard texts having no retrieval results, other tools may be needed to generate corresponding content segments.

For example, referring to FIG. 2, the analysis result of the first task message A14 sent by the user agent to the assistant agent may indicate the matching task and the matching tool. The assistant agent calls the matching tool according to the received analysis result, to obtain a video-text pair matching with the storyboard text in the segmentation result. The assistant agent may generate a matching result based on the second system message S1, the second local message U21, the second task message A21, the second local message U22, the second task message A22, the second local message U23, the second task message A23, the second local message U24 corresponding to the received analysis result, and a matching relationship between the storyboard text and the video-text pair; add the matching result to the second task pool as the second task message A24; and send the matching result to the user agent.

In an implementation, when the target task includes a generation task, the target tool that needs to be called to execute the generation task includes a generation tool, and the task execution result includes a content segment generated by calling the generation tool for the shot division result that has no matching result or requires a generated video. For example, when the target task includes a video segment generation task, the target tool that needs to be called to execute the video segment generation task includes an artificial intelligence generated content (AIGC) tool, and the task execution result includes a video segment generated by calling the AIGC tool for the shot division result that has no matching result or requires a generated video.

In the embodiment of the present disclosure, the first intelligent agent sends a fifth task execution requirement to the second intelligent agent based on the storyboard text having no matching content segment in the matching result, to indicate the generation task and the generation tool such as the AIGC tool. After calling the generation tool to perform the generation task on the storyboard text, the second intelligent agent generates a content segment according to the messages in the second message pool. For example, the AIGC tool is used to generate a video segment V4 according to storyboard text 2, generate a video segment V5 according to storyboard text 3, and so on. The second task message is generated according to the content segment or its address, identifier, link and other information; added to the second task pool; and sent to the first intelligent agent.

Moreover, during the process of generating the video by the AIGC tool, other tools such as audio tools may be called to assist in generating audio content in the video content.

For example, referring to FIG. 2, the analysis result of the first task message A15 sent by the user agent to the assistant agent may indicate the generation task and the AIGC tool. The assistant agent calls the AIGC tool according to the received analysis result, and may obtain a video segment corresponding to the storyboard text. The assistant agent may call the AIGC tool to generate a video segment generation result based on the second system message S 1, the second local message U21, the second task message A21, the second local message U22, the second task message A22, the second local message U23, the second task message A23, the second local message U24, the second task message A24, and the second local message U25 corresponding to the received analysis result; add the video segment generation result to the second task pool as the second task message A25; and send the video segment generation result to the user agent.

In an implementation, the target task includes a content synthesis task, the target tool that needs to be called to execute the content synthesis task includes a content synthesis tool, and the task execution result includes target content obtained by calling the content synthesis tool to synthesize content segments corresponding to a plurality of shot division results. For example, the target task includes a video synthesis task, the target tool that needs to be called to execute the video synthesis task includes a video synthesis tool, and the task execution result includes a target video obtained by calling the video synthesis tool to synthesize at least one of video segments, text segments or audio segments corresponding to the plurality of shot division results.

In the embodiment of the present disclosure, the first intelligent agent sends a sixth task execution requirement to the second intelligent agent based on the storyboard text and its corresponding content segments such as video segments, audio segments, text segments or other information, to indicate the content synthesis task and the content synthesis tool. After calling the content synthesis tool to perform the content synthesis task on the matching result or generation result corresponding to the storyboard text, the second intelligent agent generates a content synthesis result corresponding to the storyboard text according to the messages in the second message pool. Here, the matching results may include, for example, video segments, audio segments, text segments or other information in the content text pair matching with the storyboard text, and the generation results may include video segments, audio segments, text segments and other information generated based on the storyboard text. The content synthesis results corresponding to a plurality of storyboard texts are further synthesized into the target content. The target content may be directly output by the second intelligent agent. The target content may be added to the second task pool as the second task message, and the target content may be sent to the first intelligent agent.

For example, referring to FIG. 2, the analysis result of the first task message A16 sent by the user agent to the assistant agent may indicate the video synthesis task and the video synthesis tool. The assistant agent calls the video synthesis tool according to the received analysis result, and may synthesize the video segments, audio segments, text segments or other information according to the storyboard text to obtain a target video. The assistant agent may call the video synthesis tool to generate the target video based on the second system message S1, the second local message U21, the second task message A21, the second local message U22, the second task message A22, the second local message U23, the second task message A23, the second local message U24, the second task message A24, the second local message U25, the second task message A25, and the second local message U26 corresponding to the received analysis result.

In addition, the content segments such as video segments, audio segments, text segments or other information may be sorted and synthesized according to a timeline of the storyboard text, to obtain the target content such as the target video.

The first to sixth task execution requirements in the above embodiment are merely examples but not limitations. In actual application scenarios, one or more task execution requirements may be flexibly generated as needed. For example, the first task execution requirement indicates the retrieval task and retrieval tool, the second task execution requirement indicates the shot division task and the shot division tool, the third task execution requirement indicates the matching task and the matching tool, and the fourth task execution requirement indicates the content synthesis task and the content synthesis tool. For another example, the first task execution requirement indicates the shot division task and the shot division tool, the second task execution requirement indicates the content segment generation task and the generation tool, and the third task execution requirement indicates the content synthesis task and the content synthesis tool.

According to the embodiment of the present disclosure, the task guidance information can be used to indicate the shot division task, retrieval task, segmentation task, matching task, content segment generation task and content synthesis task, etc., and can guide the second intelligent agent to call the target tool to execute the target task, helping complete more complex content generation requirements and generate high-quality content.

FIG. 7 is a schematic flow chart of a content generation method based on artificial intelligence according to an embodiment of the present disclosure. The method includes the following steps.

S701: A second intelligent agent receives a task execution requirement sent by a first intelligent agent according to task guidance information, where the task guidance information includes guidance information for generating content, and the task execution requirement includes a target task that needs to be executed by the second intelligent agent to generate content.

S702: The second intelligent agent generates a task execution result after executing the target task according to the task execution requirement.

S703: The second intelligent agent sends the task execution result to the first intelligent agent.

In the embodiment of the present disclosure, the second intelligent agent may firstly receive the task execution requirement sent by the first intelligent agent, and obtain relevant information such as a task that needs to be executed and a tool that needs to be called to generate content indicated in the task execution requirement. The second intelligent agent may call a task execution tool to execute the corresponding target task to obtain the task execution result. The second intelligent agent may send the task execution result to other intelligent agents.

According to the embodiment of the present disclosure, the target tool can be called by the second intelligent agent to execute the target task according to the task execution requirement, helping make full use of content generation-related tools to execute more tasks, complete more complex content generation requirements, and generate high-quality content.

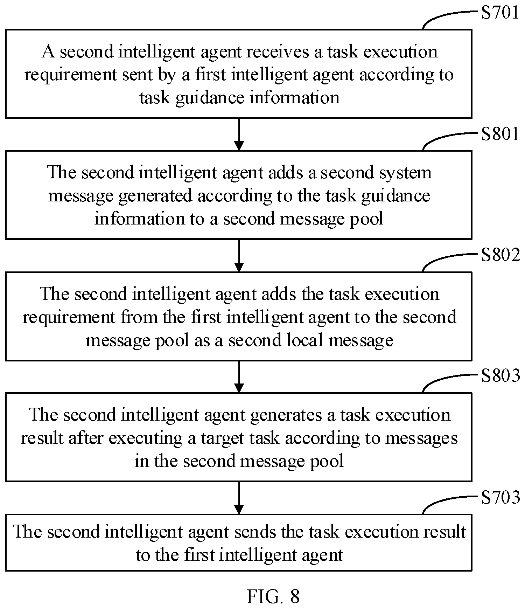

FIG. 8 is a schematic flow chart of a content generation method based on artificial intelligence according to another embodiment of the present disclosure. The method may include one or more features of the above content generation method. In an implementation, S702 in which the second intelligent agent generates the task execution result after executing the target task according to the task execution requirement includes the following steps.

S801: The second intelligent agent adds a second system message generated according to the task guidance information to a second message pool.

S802: The second intelligent agent adds the task execution requirement from the first intelligent agent to the second message pool as a second local message.

S803: The second intelligent agent generates the task execution result after executing the target task according to the messages in the second message pool.

In the embodiment of the present disclosure, the second intelligent agent may generate the second system message according to the task guidance information and a prompt template of the second intelligent agent. The second intelligent agent may add the second system message to its own second message pool. The second message pool may provide the second intelligent agent with message storage and message extraction functions. The second intelligent agent may receive the task execution request sent by the first intelligent agent and add it to the second message pool as the second local message. The second intelligent agent may obtain the task execution result after completing the target task.

According to the embodiment of the present disclosure, the second intelligent agent can call the task execution tool to execute the corresponding target task according to the second system message and the second local message to obtain the task execution result, and the second intelligent agent can be controlled by the task execution requirement to make full use of content generation-related tools to execute more tasks and complete more complex content generation requirements, thereby improving the quality of the generated content.

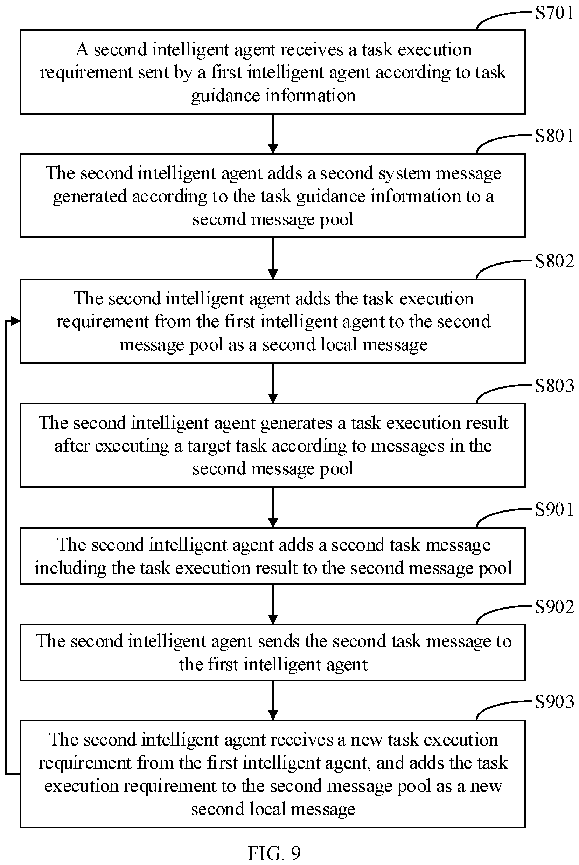

FIG. 9 is a schematic flow chart of a content generation method based on artificial intelligence according to another embodiment of the present disclosure. The method may include one or more features of the above content generation method. In an implementation, the method may further include the following steps.

S901: The second intelligent agent adds a second task message including the task execution result to the second message pool.

S703 in which the second intelligent agent sends the task execution result to the first intelligent agent includes S902: the second intelligent agent sends the second task message to the first intelligent agent.

In an implementation, the method further includes S903: the second intelligent agent receives a new task execution requirement from the first intelligent agent, adds the task execution requirement to the second message pool as a new second local message, and then returns to S802.

In the embodiment of the present disclosure, S802, S803, S901, S902 and S903 may be executed circularly, until the first intelligent agent no longer generates first task messages or analysis results thereof, or the second intelligent agent executes all target tasks.

In the embodiment of the present disclosure, the second intelligent agent may add the task execution result to the second message pool as the second task message. The second intelligent agent may send the second task message in the second message pool to the first intelligent agent, and then send the task execution result in the second task message to the first intelligent agent as a basis for further analysis and processing.

According to the embodiment of the present disclosure, the task execution requirement and the task execution result are mutually transmitted between the first intelligent agent and the second intelligent agent, helping split the content generation requirement into a plurality of task execution requirements, so that more tasks can be executed, more complex content generation requirements can be completed, and the higher-quality content can be generated.

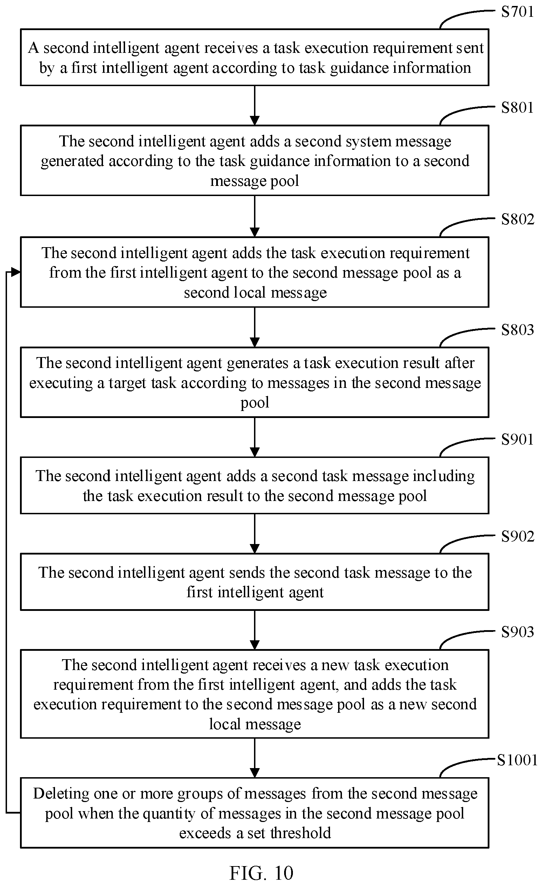

FIG. 10 is a schematic flow chart of a content generation method based on artificial intelligence according to another embodiment of the present disclosure. The method may include one or more features of the above-mentioned content generation method. In an implementation, The method may further include the following step.

S1001: One or more groups of messages are deleted from the second message pool when the quantity of messages in the second message pool exceeds a set threshold; where one group of messages includes one second local message and its corresponding second task message.

In the embodiment of the present disclosure, S802, S803, S901, S902, S903, and S1001 may be executed circularly if the execution conditions are met. For example, after S903, if it is determined that the quantity of messages exceeds the threshold, S 1001 may be executed to delete some messages. S802 is executed again to continue to generate a new first task message based on the first message pool after deletion, and then S803, S901, S902 and S903 continue to be executed until the first intelligent agent no longer generates new first task messages or the second intelligent agent completes all target tasks. For another example, after S901, if it is determined that the quantity of messages exceeds the threshold, S1001 may be executed to delete some messages. S902 and S903 are executed again until the first intelligent agent no longer generates new first task messages or the second intelligent agent completes all target tasks.

In the embodiment of the present disclosure, if the second intelligent agent detects that the quantity of messages in the second message pool is too large, some of the messages may be deleted. If one second local message and a second system message obtained by executing a task according to the second local message are taken as one group, and if there is a need to delete messages, one or more groups of messages ranked first in the message pool may be deleted each time. For example, referring to FIG. 2, U21 and A21 may be firstly deleted and then U22 and A22 may be deleted from the second message pool. The quantity thresholds of messages in the second message pool and the first message pool may be the same or different. By controlling the quantity of messages in the message pool, the amount of calculation may be effectively controlled, thereby increasing the speed of content generation.

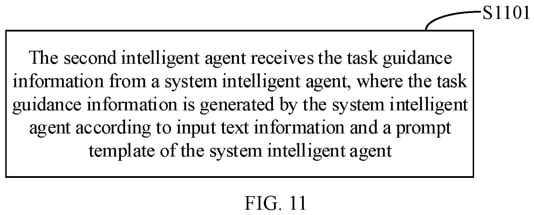

FIG. 11 is a schematic flow chart of a content generation method based on artificial intelligence according to another embodiment of the present disclosure. The method may include one or more features of the above content generation method. In an implementation, the method may further include the following step.

S1101: The second intelligent agent receives the task guidance information from a system intelligent agent, where the task guidance information is generated by the system intelligent agent according to input text information and a prompt template of the system intelligent agent.

In the embodiment of the present disclosure, prompt templates of the system intelligent agent, the first intelligent agent and the second intelligent agent may be preset. The system intelligent agent generates the task guidance information according to the input text information and its own prompt template. The input text information may include information such as text features and text vectors extracted based on the initial input text. Then, the system intelligent agent may send the task guidance information to the first intelligent agent and the second intelligent agent respectively. The first intelligent agent may generate the first system message according to the task guidance information and its own prompt template (referring to S301). The second intelligent agent may generate the second system message according to the task guidance information and its own prompt template (referring to S801).

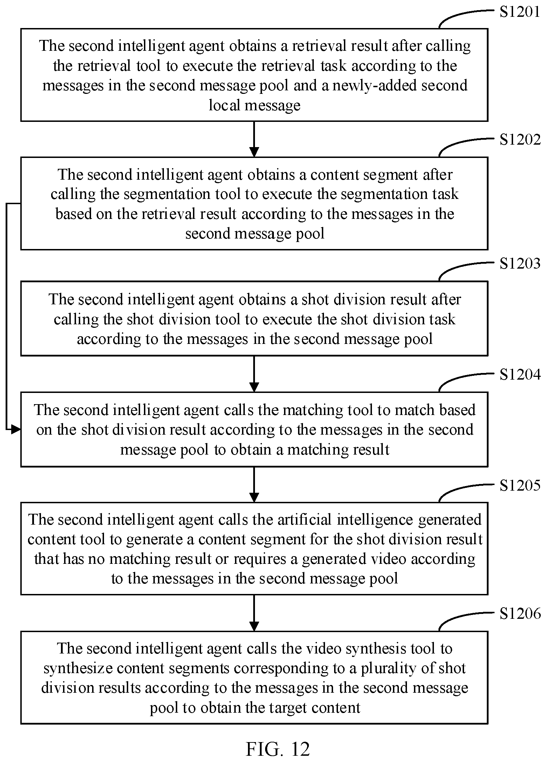

FIG. 12 is a schematic flow chart of a content generation method based on artificial intelligence according to another embodiment of the present disclosure. The method may include one or more features of the above content generation method. In an implementation, the target task includes at least one of: a retrieval task, a segmentation task, a shot division task, a matching task, a generation task, or a content synthesis task.

In an implementation, a target tool that needs to be called to execute the target task includes at least one of: a retrieval tool, a segmentation tool, a shot division tool, a matching tool, a generation tool, or a synthesis tool.

In an implementation, the task execution result includes at least one of: a retrieval result, a segmentation result, a shot division result, a matching result, a generation result, or a synthesis result.

In an implementation, when the target task includes a retrieval task, the target tool that needs to be called to execute the retrieval task includes a retrieval tool. S803 includes the following step.

S1201: The second intelligent agent obtains a retrieval result after calling the retrieval tool to execute the retrieval task according to the messages in the second message pool and a newly-added second local message.

In an implementation, when the target task includes a segmentation task, the target tool that needs to be called to execute the segmentation task includes a segmentation tool such as a computer vision tool. S803 includes the following step.

S1202: The second intelligent agent obtains a content segment (such as a video-text pair, including a segmented video segment and its corresponding text segment) after calling the segmentation tool to execute the segmentation task based on the retrieval result according to the messages in the second message pool.

In an implementation, when the target task includes a shot division task, the target tool that needs to be called to execute the shot division task includes a shot division tool. S803 includes the following step.

S1203: The second intelligent agent obtains a shot division result after calling the shot division tool to execute the shot division task according to the messages in the second message pool.

In an implementation, when the target task includes a matching task, the target tool that needs to be called to execute the matching task includes a matching tool. S803 includes the following step.

S1204: The second intelligent agent calls the matching tool to match based on the shot division result according to the messages in the second message pool to obtain a matching result.

In an implementation, when the target task includes a generation task such as a video segment generation task, the target tool that needs to be called to execute the generation task includes a generation tool such as an artificial intelligence generated content tool. S803 includes the following step.

S1205: The second intelligent agent calls the generation tool to generate a content segment (such as one or more of a video segment, an audio segment and a text segment) for the shot division result that has no matching result or requires generated content according to the messages in the second message pool.

In an implementation, when the target task includes a content synthesis task, the target tool that needs to be called to execute the content synthesis task includes a content synthesis tool. S803 includes the following step.

S1206: The second intelligent agent calls the content synthesis tool to synthesize content segments (such as at least one of video segments, text segments or audio segments) corresponding to a plurality of shot division results according to the messages in the second message pool to obtain the target content such as a target video.

In the embodiment of the present disclosure, when the second intelligent agent executes S803, specific examples of calling various target tools to execute the corresponding target tasks may refer to the relevant description about FIG. 2 in the above embodiment.

According to the embodiment of the present disclosure, the messages in the second message pool may indicate the shot division task, retrieval task, segmentation task, matching task, generation task and content synthesis task, etc., and the target tool may be called to perform the target task, helping complete more complex content generation requirements and generate high-quality content.

The content generation method in the embodiment of the present disclosure may be applied to an efficient, universal and intelligent content creation agent system. The content may include one or more of video, audio and text. Relying on the Agent model for system framework design, multi-source materials on the Internet and self-produced original materials are comprehensively utilized to build a complete content creation tool component library, such as a video creation tool library. The large model technology is used to achieve unified creation planning, tool calling and content generation for creative content.

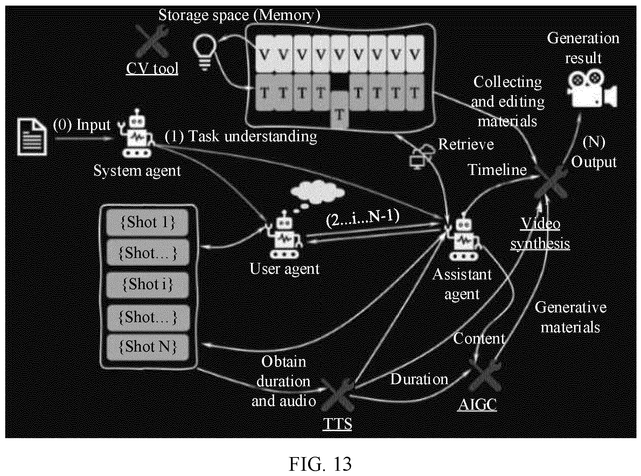

The overall framework of the system is as shown in FIG. 13. The main intelligent agents of the system may include a system agent, a user agent and an assistant agent.

The system agent is used to understand (1) a task for the user's input (0), generate specific task-related information and transmit it to the user agent and the assistant agent respectively. The user agent and the assistant agent generate their own system messages S to prompt and ensure that the user agent and the assistant agent always have a core task goal as a reference during a multi-step execution process, avoiding the goal deviation/forgetting phenomenon caused due to a too long execution process of the complex task.

The user agent understands and plans the task based on the specific task information issued by the system agent, and breaks down the task into multiple specific processes that can be implemented step by step. Each time the user agent points out that the current process to be executed is handed over to the assistant agent for actual processing, and considers the processing result of the assistant agent to decide a next execution process, when the reflection result of the user agent is to satisfy the task goal in the final system message, specified information of task completion (TASK_DONE) will be returned, and the overall Agent task execution will end and exit.

The assistant agent parses the content that needs to be executed based on the prompt content of the user agent. When the execution content involves tool calling, the assistant agent will specifically call a tool and return a call result to the user agent for further planning.

The framework may understand and process multimodal data with content such as videos. The task is highly complex and requires functions such as accurate semantic understanding and detail processing of content data such as video data, correct calling of multiple tools under complex data structure interfaces, alignment and rendering of multimodal data, etc.

The system mainly consists of the following parts.

### 1. Agent framework

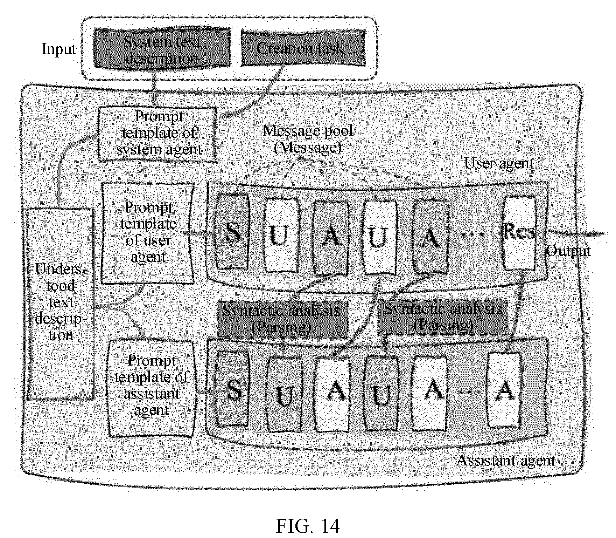

An example of an Agent framework is as shown in FIG. 14, which may include the following functional modules:
Prompt template: Sys-P, User-P and Assit-P are prompt templates of the system agent, the user agent and the assistant agent respectively, and are used to build content creation systems with different requirements, such as video creation system design and specified creation task understanding.

Text description: For example, Task_specifier is the text description of the overall content creation system, such as the text description of the video creation system; Task_info is the text description of a specific content creation task, such as a video creation task; and Specified Task is the text description generated by the content creation system after understanding the specific creation task, and guides the implementation of the specific task.

System message: The system message (S) of the user agent is generated based on Specified Task and User-P, and the system message (S) of the assistant agent is generated based on Specified Task and Assist-P.

Message pool [Messages]: The quantity of messages in the message pool of each agent may be an odd number [S, U, A, U, A,...]. When the content length of the message pool exceeds the model input requirement, [U, A] firstly added to the message pool may be popped out, where S represents a system message, U represents a user-type message, and A represents a user assistant-type message.

Syntactic analysis (Parsing): parsing the message content, including tool (action) and input, etc.

When the parsed tool name (Tool_name) exists in the configured tool component library, the assistant agent (assit) calls the corresponding tool to complete the execution of a specified function.

In addition, a maximum quantity of dialogues may be set. If the task is completed before the maximum quantity of dialogues is reached, the user will return a task completion message (TASK_DONE). For example, after a round of dialogue between the user agent and the assistant agent is completed, the dialogue may be recorded once. Through the maximum dialogue test, the agent system can jump out of a dialogue loop more reasonably.

### 2. Tool component library

### (1) Retrieval tool components

The type of tool components are used to retrieve relevant texts, images, videos, audios and other materials based on the user creation requirement and the creation content.

### (2) Computer Vision (CV) tool components

The type of tool components are mainly used to understand and analyze the content of images, videos and other materials to establish sub-materials suitable for content creation, such as video creation and editing. Examples of the CV tool components are as follows:
Portrait/Mouth cast detection: used to detect characters in materials, to avoid problems such as identification (ID) contradiction in the material application, and also avoid the problem of audio/image asynchrony.

Subtitle recognition: used to optimize the material quality, where the subtitle recognition information can also assist in understanding materials and improve material matching similarity in an editing process.

Caption description generation: The tool mainly relies on multimodal models and is mainly used to understand the content of images/videos.

Semantic shot segmentation: used to finely process the retrieved material and segment the long video material into semantically pure/precise sub-materials, which are basic content elements in the video creation task and are used to be edited and combined into new videos with different creativities.

### (3) Artificial Intelligence Generated Content (AIGC) tool components

Digital human: used to generate a digital human video to make up for shortage of basic CV materials while expanding material types to improve the richness of the generated video content.

Text-to-Image (T2I): generate image materials based on text to generate more targeted and original materials, so as to improve the originality of video generation and the video quality.

Text-To-Video (T2V): make full use of the current video generation capability to generate short video materials based on text, so as to supplement the application of highly relevant video materials.

### (4) Audio tool components

Automatic Speech Recognition (ASR): used to enhance the understanding of video materials and assist in video material matching applications.

Text To Speech (TTS): generating audio based on text while providing timestamp information at different levels, which is the basis for alignment of visual, text and audio materials in the editing process.

### (5) Video synthesis tool components

They are used to realize mixed rendering of multi-source materials, and simultaneously involve a variety of rendering special effect tools, including but not limited to: subtitle/keyword rendering, picture-in-picture/video, special effect animation, etc., to improve the presentation effect of the generated video and the sense of user generated content (UGC).

### 3. Enhanced material retrieval and match in memory

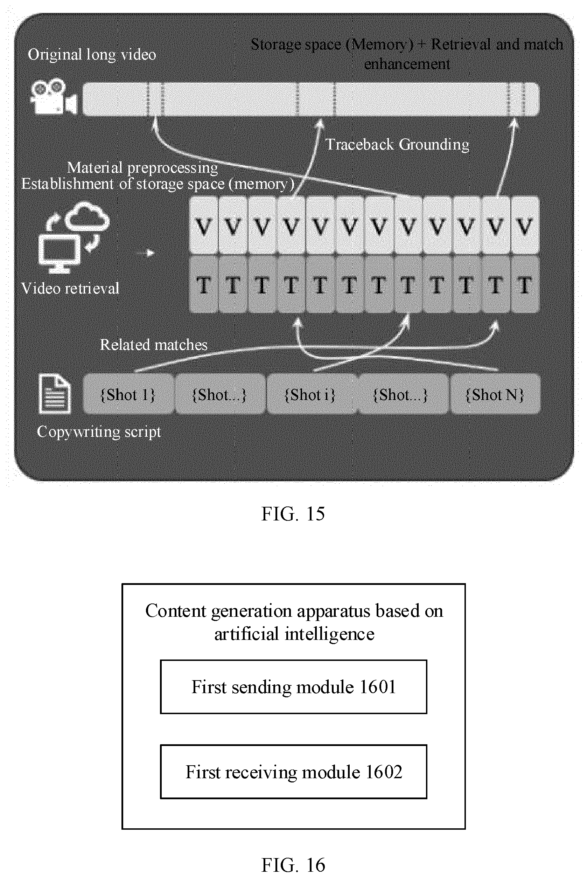

As shown in FIG. 15, the system may include a retrieval and match enhancement module based on materials in the storage space, used to achieve accurate understanding and matching of video materials to improve the generation quality of the final video. The specific process is as follows.
(1) The OCR and ASR-based text content extractions are performed on the relevant video returned by retrieval, and semantic segmentation is performed based on the large language model, to obtain [(T = text content, V = video sub-material) and then obtain a [(T, V)] list. (T, V) may be called materials in the task-related storage space, and T is used as the retrieval key and V is used as the retrieval value in the materials in the storage space. Here, V may include the video itself, or may include the address or other information of the video.
(2) The text content of the shot to be matched is selected for the text with shot planning completed, and the key in the materials in the storage space is retrieved to obtain a corresponding value (video sub-material).
(3) The sub-material in the original video is traced back using the picture similarity to obtain a precise matching timestamp, and cut out to obtain the optimal sub-material for final material editing.

FIG. 16 is a structural schematic diagram of a content generation apparatus based on artificial intelligence according to an embodiment of the present disclosure. The apparatus may be applied to a first intelligent agent, and the apparatus may include:
a first sending module 1601 configured to send a task execution requirement to a second intelligent agent according to task guidance information; where the task guidance information includes guidance information for generating content, and the task execution requirement includes a target task that needs to be executed by the second intelligent agent to generate content; and
a first receiving module 1602 configured to receive a task execution result from the second intelligent agent; where the task execution result includes an execution result generated after the second intelligent agent executes the target task.

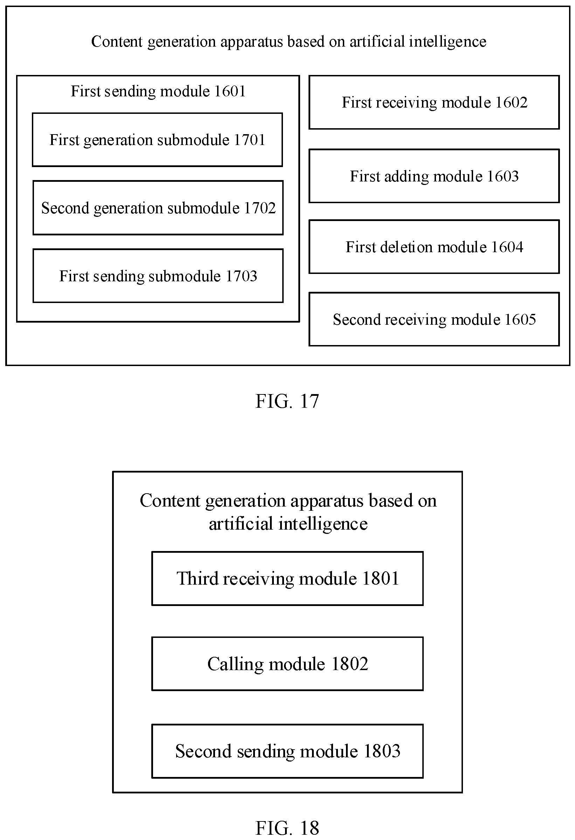

FIG. 17 is a structural schematic diagram of a content generation apparatus based on artificial intelligence according to another embodiment of the present disclosure. The apparatus may include one or more features of the above content generation apparatus. In an implementation, the first sending module 1601 includes:
a first generation submodule 1701 configured to add a first system message generated according to the task guidance information to a first message pool, where the first message pool further includes a first local message;
a second generation submodule 1702 configured to generate a first task message according to messages in the first message pool; and
a first sending submodule 1703 configured to send the task execution requirement to the second intelligent agent according to the first task message, where the task execution requirement includes the target task that needs to be executed by the second intelligent agent to generate content.

In an implementation, the first receiving module 1602 is further configured to receive a second task message from the second intelligent agent; where the second task message includes the task execution result, and the second task message is generated by the second intelligent agent according to messages in a second message pool; the second message pool includes a second system message and a second local message, the second system message is generated by the second intelligent agent according to the task guidance information, and the second local message includes the task execution requirement from the first intelligent agent.

In an implementation, as shown in FIG. 17, the apparatus further includes:
a first adding module 1603 configured to add the second task message to the first message pool as a newly-added first local message; where the first message pool further includes the first task message corresponding to the processed first local message and the newly-added first local message.

In an implementation, as shown in FIG. 17, the apparatus further includes:
a first deletion module 1604 configured to delete one or more groups of messages from the first message pool when the quantity of messages in the first message pool exceeds a set threshold; where the one group of messages includes one first local message and its corresponding first task message.

In an implementation, as shown in FIG. 17, the apparatus further includes:
a second receiving module 1605 configured to receive the task guidance information from a system intelligent agent, where the task guidance information is generated by the system intelligent agent according to input text information and a prompt template of the system intelligent agent.

In an implementation, the target task includes at least one of: a retrieval task, a segmentation task, a shot division task, a matching task, a generation task, or a content synthesis task.

In an implementation, the target tool that needs to be called to execute the target task includes at least one of: a retrieval tool, a segmentation tool, a shot division tool, a matching tool, a generation tool, or a synthesis tool.

In an implementation, the task execution result includes at least one of: a retrieval result, a segmentation result, a shot division result, a matching result, a generation result, or a synthesis result.

In an implementation, when the target task includes a retrieval task, the target tool that needs to be called to execute the retrieval task includes a retrieval tool, and the task execution result includes a retrieval result obtained after calling the retrieval tool to execute the retrieval task.

In an implementation, when the target task includes a segmentation task, the target tool that needs to be called to execute the segmentation task includes a segmentation tool such as a computer vision (CV) tool, and the task execution result includes a content segment (such as a video-text pair, including a segmented video segment and its corresponding text segment) obtained after calling the segmentation tool to execute the segmentation task based on the retrieval result.

In an implementation, when the target task includes a shot division task, the target tool that needs to be called to execute the shot division task includes a shot division tool, and the task execution result includes a shot division result obtained after calling the shot division tool to execute the shot division task.

In an implementation, the target task includes a matching task, the target tool that needs to be called to execute the matching task includes a matching tool, and the task execution result includes a matching result obtained by calling the matching tool to match based on the shot division result.

In an implementation, when the target task includes a content segment generation task, the target tool that needs to be called to execute the content segment generation task includes a generation tool such as an artificial intelligence generated content tool, and the task execution result includes a content segment (such as one or more of a video segment, an audio segment and a text segment) generated by calling the generation tool for the shot division result that has no matching result or requires generated content.

In an implementation, the target task includes a content synthesis task, the target tool that needs to be called to execute the content synthesis task includes a content synthesis tool, and the task execution result includes target content obtained by calling the content synthesis tool to synthesize content segments corresponding to a plurality of shot division results.

FIG. 18 is a structural schematic diagram of a content generation apparatus based on artificial intelligence according to an embodiment of the present disclosure. The apparatus may be applied to a second intelligent agent, and the apparatus may include:
a third receiving module 1801 configured to receive a task execution requirement sent by a first intelligent agent according to task guidance information; where the task guidance information includes guidance information for generating content, and the task execution requirement includes a target task that needs to be executed by the second intelligent agent to generate content;
a calling module 1802 configured to generate a task execution result after executing the target task according to the task execution requirement; and
a second sending module 1803 configured to send the task execution result to the first intelligent agent.

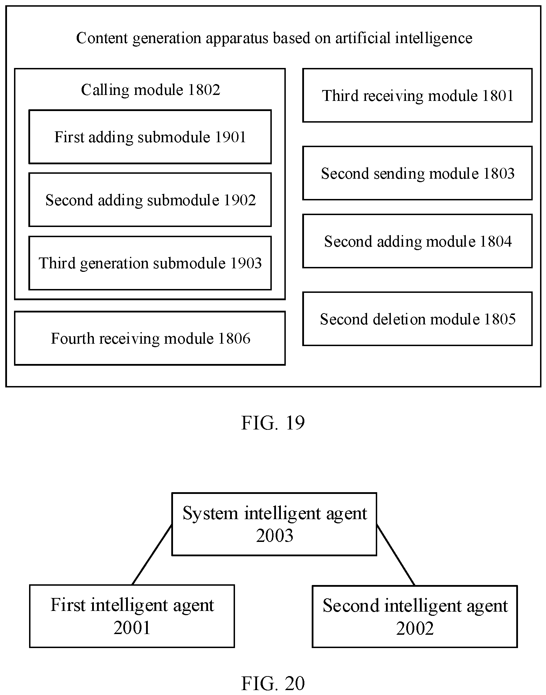

FIG. 19 is a structural schematic diagram of a content generation apparatus based on artificial intelligence according to another embodiment of the present disclosure. The apparatus may include one or more features of the above content generation apparatus. In an implementation, the calling module 1802 includes:
a first adding submodule 1901 configured to add a second system message generated according to the task guidance information to a second message pool;
a second adding submodule 1902 configured to add the task execution requirement from the first intelligent agent to the second message pool as a second local message; and
a third generation submodule 1903 configured to generate the task execution result after executing the target task according to messages in the second message pool.

In an implementation, as shown in FIG. 19, the apparatus further includes:
a second adding module 1804 configured to add a second task message including the task execution result to the second message pool; and
the second sending module 1803 further configured to send the second task message to the first intelligent agent.

In an implementation, as shown in FIG. 19, the apparatus further includes:
a second deletion module 1805 configured to delete one or more groups of messages from the second message pool when the quantity of messages in the second message pool exceeds a set threshold; where the one group of messages includes one second local message and its corresponding second task message.

In an implementation, as shown in FIG. 19, the apparatus further includes:
a fourth receiving module 1806 configured to receive the task guidance information from a system intelligent agent, where the task guidance information is generated by the system intelligent agent according to input text information and a prompt template of the system intelligent agent.

In an implementation, the target task includes at least one of: a retrieval task, a segmentation task, a shot division task, a matching task, a generation task, or a content synthesis task.

In an implementation, a target tool that needs to be called to execute the target task includes at least one of: a retrieval tool, a segmentation tool, a shot division tool, a matching tool, a generation tool, or a synthesis tool.

In an implementation, the task execution result includes at least one of: a retrieval result, a segmentation result, a shot division result, a matching result, a generation result, or a synthesis result.

In an implementation, when the target task includes a retrieval task, the target tool that needs to be called to execute the retrieval task includes a retrieval tool, and the third generation submodule is further configured to obtain a retrieval result after calling the retrieval tool to execute the retrieval task according to the messages in the second message pool and a newly-added second local message.

In an implementation, when the target task includes a segmentation task, the target tool that needs to be called to execute the segmentation task includes a segmentation tool such as a CV tool, and the third generation submodule is further configured to obtain a content segment (such as a video-text pair, including a segmented video segment and its corresponding text segment) after calling the segmentation tool to execute the segmentation task based on the retrieval result according to the messages in the second message pool.

In an implementation, when the target task includes a shot division task, the target tool that needs to be called to execute the shot division task includes a shot division tool, and the third generation submodule is further configured to obtain a shot division result after calling the shot division tool to execute the shot division task according to the messages in the second message pool.

In an implementation, when the target task includes a matching task, the target tool that needs to be called to execute the matching task includes a matching tool, and the third generation submodule is further configured to call the matching tool to match based on the shot division result according to the messages in the second message pool to obtain a matching result.

In an implementation, when the target task includes a generation task such as a video segment generation task, the target tool that needs to be called to execute the generation task includes an artificial intelligence generated content tool, and the third generation submodule is further configured to call the artificial intelligence generated content tool to generate a content segment (such as one or more of a video segment, an audio segment and a text segment) for the shot division result that has no matching result or requires generated content according to the messages in the second message pool.

In an implementation, the target task includes a content synthesis task, the target tool that needs to be called to execute the content synthesis task includes a content synthesis tool, and the third generation submodule is further configured to call the content synthesis tool to synthesize at least one of content segments, text segments or audio segments corresponding to a plurality of shot division results according to the messages in the second message pool to obtain the target content.

For the description of specific functions and examples of the modules and sub-modules of the apparatus of the embodiment of the present disclosure, reference may be made to the relevant description of the corresponding steps in the above method embodiments, and details are not repeated here.

FIG. 20 is a structural schematic diagram of an intelligent agent system according to an embodiment of the present disclosure. The intelligent agent system may include:
a first intelligent agent 2001 configured to send a task execution requirement to a second intelligent agent 2002 according to task guidance information, and receive a task execution result from the second intelligent agent 2002; where the task guidance information includes guidance information for generating content, the task execution requirement includes a target task that needs to be executed by the second intelligent agent to generate content, and the task execution result includes an execution result generated after the second intelligent agent executes the target task; and
the second intelligent agent 2002 configured to receive the task execution requirement sent by the first intelligent agent according to the task guidance information, generate the task execution result after executing the target task according to the task execution requirement, and send the task execution result to the first intelligent agent.

In an implementation, the system further includes:
a system intelligent agent 2003 configured to send the task guidance information to the first intelligent agent 2001 and the second intelligent agent 2002 respectively, where the task guidance information is generated by the system intelligent agent according to input text information and a prompt template of the system intelligent agent.

For the description of specific functions and examples of the intelligent agents in the system of the embodiment of the present disclosure, reference may be made to the relevant description of the corresponding steps in the above method embodiments, and details are not repeated here.

In the technical solution of the present disclosure, the acquisition, storage and application of the user's personal information involved are in compliance with relevant laws and regulations, and do not violate public order and good customs.

According to the embodiments of the present disclosure, the present disclosure also provides an electronic device, a readable storage medium and a computer program product.

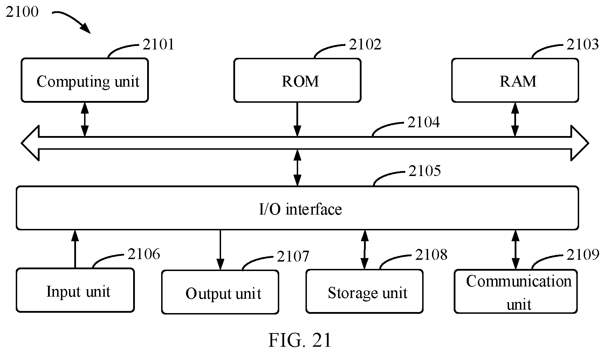

FIG. 21 shows a schematic block diagram of an example electronic device 2100 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 21, the device 2100 includes a computing unit 2101 that may perform various appropriate actions and processes according to a computer program stored in a read-only memory (ROM) 2102 or a computer program loaded from a storage unit 2108 into a random access memory (RAM) 2103. Various programs and data required for operations of the device 2100 may also be stored in the RAM 2103. The computing unit 2101, the ROM 2102 and the RAM 2103 are connected to each other via a bus 2104. An input/output (I/O) interface 2105 is also connected to the bus 2104.

A plurality of components in the device 2100 are connected to the I/O interface 2105, and include an input unit 2106 such as a keyboard, a mouse, or the like; an output unit 2107 such as various types of displays, speakers, or the like; the storage unit 2108 such as a magnetic disk, an optical disk, or the like; and a communication unit 2109 such as a network card, a modem, a wireless communication transceiver, or the like. The communication unit 2109 allows the device 2100 to exchange information/data with other devices via a computer network such as the Internet and/or various telecommunication networks.

The computing unit 2101 may be various general-purpose and/or special-purpose processing components with processing and computing capabilities. Some examples of the computing unit 2101 include, but are not limited to, a central processing unit (CPU), a graphics processing unit (GPU), various dedicated Artificial Intelligence (AI) computing chips, various computing units that run machine learning model algorithms, a digital signal processor (DSP), and any appropriate processors, controllers, microcontrollers, or the like. The computing unit 2101 performs various methods and processing described above, such as the content generation method. For example, in some implementations, the content generation method may be implemented as a computer software program tangibly contained in a computer-readable medium, such as the storage unit 2108. In some implementations, a part or all of the computer program may be loaded and/or installed on the device 2100 via the ROM 2102 and/or the communication unit 2109. When the computer program is loaded into the RAM 2103 and executed by the computing unit 2101, one or more steps of the content generation method described above may be performed. Alternatively, in other implementations, the computing unit 2101 may be configured to perform the content generation method by any other suitable means (e.g., by means of firmware).

Various implementations of the system and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a liquid crystal display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a local area network (LAN), a wide area network (WAN), and the Internet.

A computer system may include a client and a server. The client and the server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A content generation method based on artificial intelligence, comprising:
sending (S101), by a first intelligent agent, a task execution requirement to a second intelligent agent according to task guidance information; wherein the task guidance information comprises guidance information for generating content, and the task execution requirement comprises a target task that needs to be executed by the second intelligent agent to generate content; and
receiving (S102), by the first intelligent agent, a task execution result from the second intelligent agent; wherein the task execution result comprises an execution result generated after the second intelligent agent executes the target task.

2. The method of claim 1, wherein sending, by the first intelligent agent, the task execution requirement to the second intelligent agent according to the task guidance information, comprises:
adding (S301), by the first intelligent agent, a first system message generated according to the task guidance information to a first message pool, wherein the first message pool further comprises a first local message;
generating (S302), by the first intelligent agent, a first task message according to messages in the first message pool; and
sending (S303), by the first intelligent agent, the task execution requirement to the second intelligent agent according to the first task message, wherein the task execution requirement comprises the target task that needs to be executed by the second intelligent agent to generate content.

3. The method of claim 2, wherein receiving, by the first intelligent agent, the task execution result from the second intelligent agent, comprises:
receiving (S401), by the first intelligent agent, a second task message from the second intelligent agent; wherein the second task message comprises the task execution result, and the second task message is generated by the second intelligent agent according to messages in a second message pool; the second message pool comprises a second system message and a second local message, the second system message is generated by the second intelligent agent according to the task guidance information, and the second local message comprises the task execution requirement from the first intelligent agent;
preferably, the method further comprises:
adding (S402), by the first intelligent agent, the second task message to the first message pool as a newly-added first local message; wherein the first message pool further comprises the first task message corresponding to the processed first local message and the newly-added first local message.

4. The method of any one of claims 2 to 3, further comprising:
deleting (S501) one or more groups of messages from the first message pool when a quantity of messages in the first message pool exceeds a set threshold; wherein the one group of messages comprises one first local message and its corresponding first task message.

5. The method of any one of claims 1 to 4, further comprising:
receiving (S601), by the first intelligent agent, the task guidance information from a system intelligent agent, wherein the task guidance information is generated by the system intelligent agent according to input text information and a prompt template of the system intelligent agent.

6. The method of any one of claims 1 to 5, wherein the target task comprises at least one of: a retrieval task, a segmentation task, a shot division task, a matching task, a generation task, or a content synthesis task;
a target tool that needs to be called to execute the target task comprises at least one of: a retrieval tool, a segmentation tool, a shot division tool, a matching tool, a generation tool, or a synthesis tool; and
the task execution result comprises at least one of: a retrieval result, a segmentation result, a shot division result, a matching result, a generation result, or a synthesis result;
wherein when the target task comprises a retrieval task, the target tool that needs to be called to execute the retrieval task comprises a retrieval tool, and the task execution result comprises a retrieval result obtained after calling the retrieval tool to execute the retrieval task;
wherein when the target task comprises a segmentation task, the target tool that needs to be called to execute the segmentation task comprises a segmentation tool, and the task execution result comprises a content segment obtained after calling the segmentation tool to execute the segmentation task based on the retrieval result;
wherein when the target task comprises a shot division task, the target tool that needs to be called to execute the shot division task comprises a shot division tool, and the task execution result comprises a shot division result obtained after calling the shot division tool to execute the shot division task;
wherein when the target task comprises a matching task, the target tool that needs to be called to execute the matching task comprises a matching tool, and the task execution result comprises a matching result obtained by calling the matching tool to match based on the shot division result;
wherein when the target task comprises a generation task, the target tool that needs to be called to execute the generation task comprises a generation tool, and the task execution result comprises a content segment generated by calling the generation tool for the shot division result that has no matching result or requires generated content;
wherein when the target task comprises a content synthesis task, the target tool that needs to be called to execute the content synthesis task comprises a content synthesis tool, and the task execution result comprises target content obtained by calling the content synthesis tool to synthesize content segments corresponding to a plurality of shot division results.

7. A content generation method based on artificial intelligence, comprising:
receiving (S701), by a second intelligent agent, a task execution requirement sent by a first intelligent agent according to task guidance information; wherein the task guidance information comprises guidance information for generating content, and the task execution requirement comprises a target task that needs to be executed by the second intelligent agent to generate content;
generating (S702), by the second intelligent agent, a task execution result after executing the target task according to the task execution requirement; and
sending (S703), by the second intelligent agent, the task execution result to the first intelligent agent.

8. The method of claim 7, wherein generating, by the second intelligent agent, the task execution result after executing the target task according to the task execution requirement, comprises:
adding (S801), by the second intelligent agent, a second system message generated according to the task guidance information to a second message pool;
adding (S802), by the second intelligent agent, the task execution requirement from the first intelligent agent to the second message pool as a second local message; and
generating (S803), by the second intelligent agent, the task execution result after executing the target task according to messages in the second message pool;
preferably, the method further comprises:
adding (S901), by the second intelligent agent, a second task message comprising the task execution result to the second message pool;
sending, by the second intelligent agent, the task execution result to the first intelligent agent, comprises: sending (S902), by the second intelligent agent, the second task message to the first intelligent agent.

9. The method of claim 8, further comprising:
deleting (S1001) one or more groups of messages from the second message pool when a quantity of messages in the second message pool exceeds a set threshold; wherein one group of messages comprises one second local message and its corresponding second task message.

10. The method of any one of claims 8 to 9, further comprising:
receiving (S1101), by the second intelligent agent, the task guidance information from a system intelligent agent, wherein the task guidance information is generated by the system intelligent agent according to input text information and a prompt template of the system intelligent agent.

11. The method of any one of claims 8 to 10, wherein the target task comprises at least one of: a retrieval task, a segmentation task, a shot division task, a matching task, a generation task, or a content synthesis task;
a target tool that needs to be called to execute the target task comprises at least one of: a retrieval tool, a segmentation tool, a shot division tool, a matching tool, a generation tool, or a synthesis tool; and
the task execution result comprises at least one of: a retrieval result, a segmentation result, a shot division result, a matching result, a generation result, or a synthesis result;
wherein the second intelligent agent generates the task execution result after executing the target task according to the messages in the second message pool, comprising: when the target task comprises a retrieval task, the target tool that needs to be called to execute the retrieval task comprises a retrieval tool, and the second intelligent agent obtains a retrieval result after calling the retrieval tool to execute the retrieval task according to the messages in the second message pool and a newly-added second local message;
wherein the second intelligent agent generates the task execution result after executing the target task according to the messages in the second message pool, further comprising: when the target task comprises a segmentation task, the target tool that needs to be called to execute the segmentation task comprises a segmentation tool, and the second intelligent agent obtains a content segment after calling the segmentation tool to execute the segmentation task based on the retrieval result according to the messages in the second message pool;
wherein the second intelligent agent generates the task execution result after executing the target task according to the messages in the second message pool, further comprising: when the target task comprises a shot division task, the target tool that needs to be called to execute the shot division task comprises a shot division tool, and the second intelligent agent obtains a shot division result after calling the shot division tool to execute the shot division task according to the messages in the second message pool;
wherein the second intelligent agent generates the task execution result after executing the target task according to the messages in the second message pool, further comprising at least one of:
when the target task comprises a matching task, the target tool that needs to be called to execute the matching task comprises a matching tool, and the second intelligent agent calls the matching tool to match based on the shot division result according to the messages in the second message pool to obtain a matching result; or
when the target task comprises a generation task, the target tool that needs to be called to execute the generation task comprises a generation tool, and the second intelligent agent calls the generation tool to generate a content segment for the shot division result that has no matching result or requires generated content according to the messages in the second message pool;
wherein the second intelligent agent generates the task execution result after executing the target task according to the messages in the second message pool, further comprising: when the target task comprises a content synthesis task, the target tool that needs to be called to execute the content synthesis task comprises a content synthesis tool, and the second intelligent agent calls the content synthesis tool to synthesize content segments corresponding to a plurality of shot division results according to the messages in the second message pool to obtain target content.

12. A content generation apparatus based on artificial intelligence, applied to a first intelligent agent, comprising:
a first sending module (1601) configured to send a task execution requirement to a second intelligent agent according to task guidance information; wherein the task guidance information comprises guidance information for generating content, and the task execution requirement comprises a target task that needs to be executed by the second intelligent agent to generate content; and
a first receiving module (1602) configured to receive a task execution result from the second intelligent agent; wherein the task execution result comprises an execution result generated after the second intelligent agent executes the target task.

13. A content generation apparatus based on artificial intelligence, applied to a second intelligent agent, comprising:
a third receiving module (1801) configured to receive a task execution requirement sent by a first intelligent agent according to task guidance information; wherein the task guidance information comprises guidance information for generating content, and the task execution requirement comprises a target task that needs to be executed by the second intelligent agent to generate content;
a calling module (1802) configured to generate a task execution result after executing the target task according to the task execution requirement; and
a second sending module (1803) configured to send the task execution result to the first intelligent agent.

14. An intelligent agent system, comprising:
a first intelligent agent (2001) configured to send a task execution requirement to a second intelligent agent according to task guidance information, and receive a task execution result from the second intelligent agent; wherein the task guidance information comprises guidance information for generating content, the task execution requirement comprises a target task that needs to be executed by the second intelligent agent to generate content, and the task execution result comprises an execution result generated after the second intelligent agent executes the target task; and
the second intelligent agent (2002) configured to receive the task execution requirement sent by the first intelligent agent according to the task guidance information, generate the task execution result after executing the target task according to the task execution requirement, and send the task execution result to the first intelligent agent.

15. A non-transitory computer-readable storage medium storing a computer instruction thereon, wherein the computer instruction is used to cause a computer to execute the method of any one of claims 1 to 11.
